# EUROPÄISCHE PATENTSCHRIFT

(11) **EP 2 817 196 B1**
(45) Veröffentlichungstag und Bekanntmachung des Hinweises auf die Patenterteilung: **31.08.2016**
(21) Anmeldenummer: 13704361.8
(22) Anmeldetag: 13.02.2013
(51) Int. Cl.: B62D 7/22

(54) **LENKSÄULE FÜR EIN KRAFTFAHRZEUG**
STEERING COLUMN FOR A MOTOR VEHICLE
COLONNE DE DIRECTION POUR VÉHICULE À MOTEUR

(30) Priorität: 21.02.2012 DE 102012101386; 16.03.2012 DE 202012100950 U
(43) Veröffentlichungstag der Anmeldung: 31.12.2014
(73) Patentinhaber: ThyssenKrupp Presta Aktiengesellschaft, 9492 Eschen (LI); ThyssenKrupp AG, 45143 Essen (DE)
(72) Erfinder: KORNMAYER, Andreas, 88214 Ravensburg (DE); HEHLE, Karl-Mathias, A-6912 Hörbranz (AT)
(74) Vertreter: Hofmann, Ralf U.
(86) Internationale Anmeldenummer: PCT/EP2013/000412
(87) Internationale Veröffentlichungsnummer: WO 2013/124043

(56) Entgegenhaltungen:
- DE-A1-102004 019 093
- JP-A- 2007 120 592
- US-A- 5 460 574
- US-A1- 2002 190 450
- US-A1- 2003 004 001

## Beschreibung

Die Erfindung bezieht sich auf eine Lenksäule für ein Kraftfahrzeug mit einer Lenkwelle, wobei eine Dämpfungseinrichtung zur Dämpfung von über die Lenkwelle übertragenen Vibrationen vorgesehen ist, welche ein um eine Längsmittelachse drehbares inneres Dämpferteil, dessen äußere Umfangskontur im Querschnitt durch die Dämpfungseinrichtung gesehen mehrere in Umfangsrichtung um die Längsmittelachse voneinander beabstandete radial nach außen vorspringende äußere Erhebungen aufweist, zwischen denen äußere Vertiefungen der äußeren Umfangskontur des inneren Dämpferteils liegen, wobei der Übergang zwischen einer jeweiligen äußeren Erhebung und einer daran anschließenden äußeren Vertiefung dort liegt, wo die äußere Umfangskontur des inneren Dämpferteils die radiale Stelle überquert, die dem Mittelwert zwischen dem radial am weitesten außen liegenden Punkt der äußeren Erhebung und dem radial am weitesten innen liegenden Punkt der äußeren Vertiefung entspricht, ein das innere Dämpferteil umgebendes um die Längsmittelachse drehbares äußeres Dämpferteil, dessen innere Umfangskontur im Querschnitt durch die Dämpfungseinrichtung gesehen mehrere in Umfangsrichtung um die Längsmittelachse des hinteren Lenkwellen-Abschnitts voneinander beabstandete radial nach innen vorspringende innere Erhebungen aufweist, zwischen denen innere Vertiefungen der inneren Umfangskontur des äußeren Dämpferteils liegen, wobei der Übergang zwischen einer jeweiligen inneren Erhebung und einer daran anschließenden inneren Vertiefung dort liegt, wo die innere Umfangskontur des äußeren Dämpferteils die radiale Stelle überquert, die dem Mittelwert zwischen dem radial am weitesten innen liegenden Punkt der inneren Erhebung und dem radial am weitesten außen liegenden Punkt der inneren Vertiefung entspricht, und ein in einem radialen Zwischenraum zwischen dem inneren Dämpferteil und dem äußeren Dämpferteil angeordnetes elastomeres Dämpfungsmaterial umfasst, welches den Zwischenraum zwischen dem inneren Dämpferteil und dem äußeren Dämpferteil vollständig ausfüllt, wobei der Winkelbereich, über den sich eine jeweilige äußere Erhebung der äußeren Umfangskontur des inneren Dämpferteil in Umfangsrichtung um die Längsmittelachse erstreckt, kleiner als der jeweilige Winkelbereich ist, über den sich eine jeweilige äußere Vertiefung der äußeren Umfangskontur des inneren Dämpferteils in Umfangsrichtung um die Längsmittelachse erstreckt.
Lenkwellen von Kraftfahrzeugen dienen zur Übertragung der Drehbewegung von einem Lenkrad zu einem Lenkgetriebe. Solche Lenkwellen weisen herkömmlicherweise mehrere gerade Abschnitte auf, die jeweils durch ein Kardangelenk verbunden sind, wobei ein (bezogen auf die Vorwärts-Fahrtrichtung) hinterer Lenkwellen-Abschnitt an das Lenkrad anschließt und von einer Manteleinheit drehbar gelagert ist. Um im Falle eines Fahrzeugcrashes ein Zusammenschieben des hinteren Lenkwellen-Abschnitts zu ermöglichen, besitzt dieser zwei gegeneinander teleskopierbare Teilstücke. Über ein erstes Kardangelenk der Lenkwelle schließt an den hinteren Lenkwellen-Abschnitt ein mittlerer Lenkwellen-Abschnitt an, an welchen, wiederum über ein Kardangelenk, ein vorderer Lenkwellen-Abschnitt anschließt, der an das Lenkgetriebe angeschlossen ist. Der mittlere und/oder vordere Lenkwellen-Abschnitt können ebenfalls teleskopierbar ausgebildet sein. Der mittlere Lenkwellen-Abschnitt kann auch entfallen, sodass an das erste Kardangelenk direkt der vordere Lenkwellen-Abschnitt anschließt. Die Lenkwelle zusammen mit den diese lagernden und tragenden Teilen, die mit dem Fahrzeugchassis verbunden werden, wird üblicherweise als Lenksäule bezeichnet. Um eine Anpassung an die Sitzposition des Fahrers zu ermöglichen, sind solche Lenksäulen häufig verstellbar ausgebildet, wobei die Verstellbarkeit eine Längenverstellung (unter Verschiebung des hinteren Endes des hinteren Lenkwellen-Abschnitts in Richtung der Längsmittelachse des hinteren Lenkwellen-Abschnitts) und/oder eine Höhen- bzw. Neigungsverstellung (unter Verschwenkung des hinteren Lenkwellen-Abschnitts um eine horizontale, rechtwinkelig zur Längsmittelachse des hinteren Lenkwellen-Abschnitts stehende Achse) umfassen kann.

Um über die Lenkwelle übertragene Vibrationen zu dämpfen, sind Dämpfungseinrichtungen bekannt. So geht aus der EP 1 45 572 A1 eine im vorderen Lenkwellen-Abschnitt angeordnete Dämpfungseinrichtung hervor. Diese umfasst ein inneres und ein äußeres Dämpferteil, zwischen denen ein elastomeres Dämpfungsmaterial angeordnet ist, wobei die Dämpferteile jeweils von einem Endabschnitt eines Teilstücks des vorderen Lenkwellen-Abschnitts gebildet werden und von der Kreisform abweichende Querschnittskonturen aufweisen, um einen Formschluss bezüglich einer Drehbewegung auszubilden.

Aus der EP 1 260 725 A2 und JP 10-019054 A gehen in ein Kardangelenk integrierte Dämpfungseinrichtungen zum Einsatz in einer Lenkwelle hervor. Gezeigt sind innere und äußere Dämpferteile mit wellenförmigen Konturen, zwischen denen ein elastomeres Dämpfungsmaterial angeordnet ist.

Aus der GB 897 771 B geht eine in einer Motor-Antriebswelle angeordnete Dämpfungseinrichtung hervor, die erste und zweite Dämpferteile umfasst, von denen eines oder beide von der Kreisform abweichende Konturen aufweisen und zwischen denen ein elastomeres Dämpfermaterial liegt.

Eine Einrichtung der eingangs genannten Art geht aus der DE 10 2004 019 093 A1 hervor. Zwischen einem äußeren Dämpferteil und einem inneren Dämpferteil befindet sich ein elastomeres Dämpungsmaterial. Dieses elastomere Dämpfungsmaterial kann dabei gegenüber zumindest einem der Dämpferteile in Richtung der Lenksäulenachse gleiten, um axiale Vibrationen zu entkoppeln. Zur Begrenzung der gegenseitigen Längsverschiebbarkeit dienen zentrierende Abschnitte des gummielastischen Körpers, wodurch die Ausbildung relativ aufwendig wird.

Aus der US 2002/0190450 A1 geht eine weitere Lenksäule mit einer Dämpfungseinrichtung hervor, bei welcher ein elastomeres Dämpfungsmaterial zwischen von der Kreisform abweichenden inneren und äußeren Dämpferteilen angeordnet ist. Das elastomere Dämpfungsmaterial besitzt hier in Umfangsrichtung Abschnitte mit unterschiedlichen Wandstärken, wobei in den Abschnitten mit den geringen Wandstärken Freiräume ausgebildet sind. Es kann dadurch ein progressives Dämpfungsverhalten bereitgestellt werden.

Aufgabe der Erfindung ist es eine vorteilhafte Lenksäule der eingangs genannten Art bereitzustellen, bei der über die Lenkwelle übertragene Vibrationen in effektiver und zweckmäßiger Weise gedämpft werden. Erfindungsgemäß gelingt dies durch eine Lenksäule mit den Merkmalen des Anspruchs 1.

Bei der Lenksäule gemäß der Erfindung ist das elastomere Dämpfungsmaterial sowohl mit der inneren Oberfläche des äußeren Dämpferteils als auch mit der äußeren Oberfläche des inneren Dämpferteils stoffschlüssig und/oder adhäsiv verbunden. Im Übrigen ist der Winkelbereich, über den sich eine jeweilige äußere Erhebung der äußeren Umfangskontur des inneren Dämpferteils in Umfangsrichtung (= Drehrichtung) um die Längsmittelachse erstreckt, kleiner als der jeweilige Winkelbereich, über den sich eine jeweilige äußere Vertiefung der äußeren Umfangskontur des inneren Dämpferteils in Umfangsrichtung um die Längsmittelachse erstreckt. Vorzugsweise ist der Winkelbereich, über den sich eine jeweilige äußere Vertiefung der äußeren Umfangskontur des inneren Dämpferteils in Umfangsrichtung um die Längsmittelachse erstreckt um 25% bis 50% größer, besonders bevorzugt um 30% bis 45% größer, als der Winkelbereich, über den sich eine jeweilige äußere Erhebung der äußeren Umfangskontur des inneren Dämpferteils in Umfangsrichtung um die Längsmittelachse erstreckt.

Es wurde in überraschender Weise festgestellt, dass sich mit einer in erfindungsgemäßer Weise ausgebildeten Dämpfungseinrichtung eine besonders hohe Vibrations- bzw. Geräuschdämmung bei einer ausreichenden Steifigkeit erreichen lässt.

Über die Lenkwelle werden sowohl in axialer Richtung als auch in die Drehrichtung um die Längsmittelachse (= Rotationsrichtung) laufende Vibrationen bzw. in diese Richtungen sich ausbreitende Komponenten solcher Vibrationen auf die Dämpfungseinrichtung übertragen. In axialer Richtung laufende Vibrationen können durch die Dämpfungseinrichtung in effektiver Weise dadurch gedämpft werden, dass die Dämpfungseinrichtung in diese Richtung relativ weich ausgebildet sein kann, im Verhältnis zur Rotationsrichtung. In Rotationsrichtung ist die Dämpfungseinrichtung dagegen vorteilhafterweise härter ausgebildet. In diese Richtung verlaufende Vibrationen werden an Strukturen, insbesondere Stoffübergängen, der Dämpfungseinrichtung gestreut, insbesondere durch Reflektionen und Brechungen. Durch solche Streuungen und damit verbundene Interferenzen kommt es zur Verminderung der Übertragung der Vibrationen, unter anderem durch destruktive Interferenzen, wodurch eine effektive Vibrations- bzw. Geräuschdämmung unterstützt wird.

Vorteilhafterweise ragen die äußeren Erhebungen der äußeren Umfangskontur des inneren Dämpferteils in die inneren Vertiefungen der inneren Umfangskontur des äußeren Dämpferteils, es liegt also ein Überlapp zwischen dem Bereich der radialen Erstreckung der äußeren Erhebungen des inneren Dämpferteils und dem Bereich der radialen Erstreckung der inneren Vertiefungen des äußeren Dämpferteils vor. Damit kann es ermöglicht werden, dass in Drehrichtung um die Längsmittelachse eine wesentlich geringere Elastizität (die vorzugsweise weniger als ein Drittel beträgt) zwischen dem inneren und dem äußeren Dämpferteil als in axialer Richtung der Längsmittelachse erreicht wird. Insbesondere kann in Drehrichtung um die Längsmittelachse eine Kraftübertragung überwiegend unter Kompression des Dämpfungsmaterials erreicht werden, während das Dämpfungsmaterial bei einer axialen Verschiebung zwischen dem inneren und dem äußeren Dämpferteil hauptsächlich auf Scherung belastet wird.

Vorzugsweise ist vorgesehen, dass im Querschnitt durch die Dämpfungseinrichtung gesehen die äußere Umfangskontur des inneren Dämpferteils gekrümmte erste Abschnitte aufweist, welche die äußeren Erhebungen bilden, wobei die von den ersten Abschnitten gebildeten äußeren Erhebungen in einem ersten Krümmungsradius einbeschrieben sind, und zweite Abschnitte aufweist, welche zwischen den ersten Abschnitten in den Bereichen der äußeren Vertiefungen liegen und welche Böden aufweisen, die einen zweiten Krümmungsradius besitzen, der größer als der erste Krümmungsradius ist, vorzugsweise mehr als doppelt so groß, besonders bevorzugt mehr als dreimal so groß, oder die geradlinig verlaufen. Wenn zuvor angeführt ist, dass die von den ersten Abschnitten gebildeten äußeren Erhebungen in einem ersten Krümmungsradius einbeschrieben sind, so ist damit der Radius des kleinsten Kreises gemeint, der um die jeweilige Erhebung gelegt werden kann.

Mit Vorteil ist der Radius eines größten Umschreibungskreises des inneren Dämpferteils, der durch die radial am weitesten außen liegenden Punkte der äußeren Erhebungen verläuft, um 10% bis 30% größer ist als der Radius eines kleinsten Umschreibungskreises des inneren Dämpferteils ist, der durch die radial am weitesten innen liegenden Punkte der äußeren Vertiefungen verläuft. In bevorzugten Ausführungsformen beträgt die Differenz zwischen dem größten Umschreibungskreis und dem kleinsten Umschreibungskreis (im Durchmesser gemessen) mindestens 2mm, bevorzugt mindestens 5mm, und maximal 10mm, bevorzugt maximal 7mm.

In einer bevorzugten Ausführungsform weist das äußere Dämpferteil eine im Querschnitt durch die Dämpfungseinrichtung gesehen von der Kreisform abweichende äußere Umfangskontur auf, mit der es mit einer im Querschnitt durch die Dämpfungseinrichtung gesehen von der Kreisform abweichenden inneren Umfangskontur eines hülsenförmigen Abschnitts eines ersten Welltenteils der Lenkwelle in einem in Bezug auf die Drehrichtung um die Längsmittelachse formschlüssigen Eingriff steht, wobei das erste Wellenteil von der Dämpfungseinrichtung in Richtung der Längsmittelachse abstehen kann, d.h. das erste Wellenteil kann die Dämpfungseinrichtung in axialer Richtung überragen.

In einer weiteren vorteilhaften Ausführungsform weist das innere Dämpferteil eine im Querschnitt gesehen von der Kreisform abweichende innere Umfangskontur auf, mit der es mit einer im Querschnitt gesehen von der Kreisform abweichenden äußeren Umfangskontur eines Abschnitts eines zweiten Wellenteils der Lenkwelle in einem in Bezug auf die Drehrichtung um die Längsmittelachse formschlüssigen Eingriff steht, wobei das zweite Wellenteil von der Dämpfungseinrichtung in Richtung der Längsmittelachse abstehen kann, d.h. das zweite Wellenteil kann die Dämpfungseinrichtung in axialer Richtung überragen.

Günstigerweise ist das zweite Wellenteil mit einem dritten Wellenteil drehfest verbunden, wobei das dritten Wellenteil vom zweiten Wellenteil in Richtung der Längsmittelachse absteht.

In einer vorteilhaften Ausführungsform der Erfindung ist die Dämpfungseinrichtung in einen hinteren Lenkwellen-Abschnitt integriert, der geradlinig verläuft und um die Längsmittelachse drehbar ist und an dem am hinteren Ende das Lenkrad montierbar ist. An den hinteren Lenkwellen-Abschnitt schließt über ein Kardangelenk ein weiterer geradlinig verlaufender Lenkwellen-Abschnitt an. Dieser weitere Lenkwellen-Abschnitt kann mit dem Lenkgetriebe verbunden sein oder es kann mindestens ein noch weiterer Lenkwellen-Abschnitt vorgesehen sein, wobei zwischen den geradlinig verlaufenden Lenkwellen-Abschnitten jeweils ein Kardangelenk angeordnet ist. Die Integration in den hinteren Lenkwellen-Abschnitt bringt Vorteile bei der Vibrationsdämpfung von über die Lenkwelle übertragenen Vibrationen.

Eine mögliche Ausbildung der Erfindung sieht vor, dass die Lenksäule eine elektrische Hilfskrafteinrichtung aufweist. Solche elektrischen Hilfskrafteinrichtungen dienen zur Unterstützung der vom Fahrer ausgeübten Lenkkraft und/oder stellen hilfskraftbetriebene Lenkwinkelüberlagerungseinrichtungen dar. Die Dämpfungseinrichtung liegt hierbei günstigerweise zwischen dem hinteren Ende der Lenkwelle, an welchem ein Lenkrad mit der Lenkwelle verbindbar ist, und der elektrischen Hilfskrafteinrichtung. Von der Hilfskrafteinrichtung auf die Lenkwelle übertragene Vibrationen werden somit von der Dämpfungseinrichtung gedämpft, bevor sie auf das Lenkrad oder Strukturbauteile des Kraftfahrzeugs übertragen werden können.

Wenn man der Lenkwelle ausgehend von ihrem hinteren Ende bis zu ihrem vorderen Ende folgt, so schließt an das hintere Ende zuerst ein geradliniger hinterer Lenkwellen-Abschnitt an. An einer Stelle von dessen Längserstreckung ist vorzugsweise die Dämpfungseinrichtung angeordnet. Falls eine Hilfskrafteinrichtung vorhanden ist, so wirkt diese günstigerweise weiter weg vom hinteren Ende der Lenkwelle mit der Lenkwelle zusammen, vorzugsweise immer noch im hinteren Lenkwellen-Abschnitt. An seinem vorderen Ende ist der hintere Lenkwellen-Abschnitt an das erste Kardangelenk angeschlossen, auf welches ein weiterer Lenkwellen-Abschnitt folgt.

In einer vorteilhaften Ausführungsform der Erfindung ist der hintere Lenkwellen-Abschnitt zumindest über ein vorderes Drehlager und ein näher beim hinteren Ende des hinteren Lenkwellen-Abschnitts liegendes hinteres Lager drehbar gelagert, wobei die Dämpfungseinrichtung im axialen Bereich zwischen dem vorderen und dem hinteren Drehlager angeordnet ist. Es kann hierbei auch eine gute koaxiale Ausrichtung der Dämpfungseinrichtung erreicht werden.

Zusätzlich zur genannten Dämpfungseinrichtung können ein oder mehrere weitere Dämpfungseinrichtungen in der Lenkwelle angeordnet sein. Die Anordnung kann hierbei im ersten Lenkwellen-Abschnitt und/oder in einem anderen Lenkwellen-Abschnitt und/oder in einem zwei Lenkwellen-Abschnitte verbindenden Kardangelenk sein.

Wenn in dieser Schrift im Zusammenhang mit der Lenksäule bzw. Lenkwelle von "vorne" und "hinten" die Rede ist, so ist dies in Bezug auf die Vorwärts-Fahrtrichtung bzw. in Bezug auf den Abstand zur Fahrzeugfront zu verstehen.

Wenn in dieser Schrift im Zusammenhang mit dem hinteren Lenkwellen-Abschnitt oder mit der Dämpfungseinrichtung von "innen" und "außen" die Rede ist, so ist dies auf die radiale Lage relativ zur Längsmittelachse des hinteren Lenkwellen-Abschnitts bezogen. Ein weiter innen liegendes Teil weist also einen kleineren Abstand von der Längsmittelachse auf als ein weiter außen liegendes Teil.

Weitere Vorteile und Einzelheiten der Erfindung werden im Folgenden anhand der beiliegenden Zeichnung erläutert. In dieser zeigen:
Fig. 1 eine Schrägsicht eines an das hintere Ende der Lenkwelle anschließenden Teils der Lenkwelle mit den die Lenkwelle lagernden und tragenden Teilen, in einer Schrägsicht;
Fig. 2 eine Seitenansicht;
Fig. 3 eine Ansicht von unten;
Fig. 4 einen Längsmittelschnitt durch die im Bereich des hinteren Lenkwellen-Abschnitts liegenden Teile entlang einer Schnittlinie AA von Fig. 3;
Fig. 5 eine vergrößerte Darstellung der Lenkwelle im Bereich der Dämpfungseinrichtung in einem Längsmittelschnitt entsprechend Fig. 4;
Fig. 6 einen Schnitt entlang der Linie BB von Fig. 4;
Fig. 7 einen an ein hinteres Ende anschließenden Teil einer Lenkwelle mit den diese lagernden und tragenden Teilen entsprechend einer zweiten Ausführungsform, in Seitenansicht;
Fig. 8 die Teile von Fig. 7 in einer Schrägsicht;
Fig. 9 die zweite Ausführungsform im Bereich des hinteren Lenkwellen-Abschnitts im Längsmittelschnitt dargestellt;
Fig. 10 einen vergrößerten Ausschnitt von Fig. 9;
Fig. 11 eine Schrägsicht eines Teils der Vorrichtung gemäß der zweite Ausführungsform;
Fig. 12 eine Explosionsdarstellung von Teilen der Lenkwelle;
Fig. 13 einen Längsmittelschnitt durch die Teile entsprechend Fig. 12;
Fig. 14 eine Schrägsicht einer etwas modifizierten weiteren Ausführungsform;
Fig. 15 und 16 Darstellungen analog Fig. 12 und 13 noch einer weiteren modifizierten Ausführungsform;
Fig. 17 eine Darstellung analog Fig. 14 noch einer weiteren modifizierten Ausführungsform;
Fig. 18 eine Darstellung analog Fig. 2 noch einer weiteren modifizierten Ausführungsform.

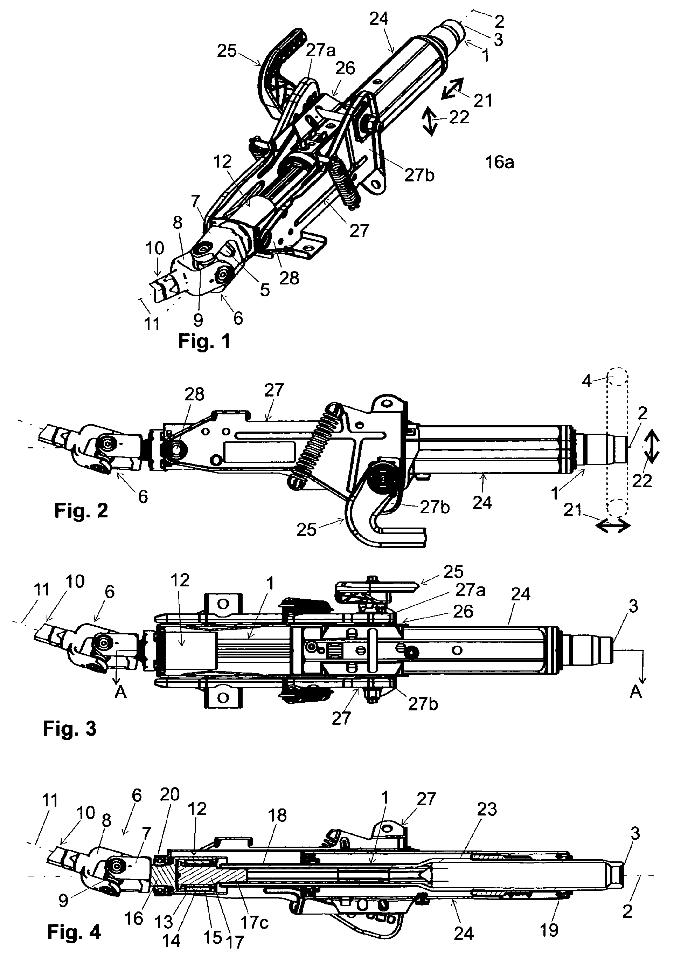

Ein erstes Ausführungsbeispiel der Erfindung ist in den Fig. 1 bis 6 dargestellt.

Die Lenksäule weist eine Lenkwelle mit einem hinteren Lenkwellen-Abschnitt 1 auf, der geradlinig verläuft und um eine Längsmittelachse 2 drehbar ist. Am hinteren Ende 3 des hinteren Lenkwellen-Abschnitts 1 ist ein nur in Fig. 2 durch strichlierte Linien schematisch angedeutetes Lenkrad 4 montierbar.

Der hintere Lenkwellen-Abschnitt erstreckt sich von einem hinteren Ende 3 geradlinig bis zu einem vorderen Ende 5, im Bereich von dem der hintere Lenkwellen-Abschnitt 1 mit einem Kardangelenk 6 der Lenkwelle verbunden ist. Das Kardangelenk 6 umfasst eine hintere Gelenkgabel 7, eine vordere Gelenkgabel 8 und ein die hintere mit der vorderen Gelenkgabel gelenkig verbindendes Zapfenkreuz 9. Die hintere Gelenkgabel 7 ist am hinteren Lenkwellen-Abschnitt 1 festgelegt. Die vordere Gelenkgabel 8 ist an einem weiteren Lenkwellen-Abschnitt 10 festgelegt. Dieser erstreckt sich wiederum geradlinig entlang einer Längsmittelachse 11, die mit der Längsmittelachse 2 des hinteren Lenkwellen-Abschnitts 1 einen Winkel ≠ 0° einschließt, wobei die Abweichung von der parallelen Lage dieser beiden Längsmittelachsen 2, 11 insbesondere mehr als 20° beträgt.

Der weitere Lenkwellen-Abschnitt 10 kann direkt mit einem nicht dargestellten Lenkgetriebe verbunden sein oder er kann über ein weiteres Kardangelenk mit noch einem weiteren geradlinig verlaufenden Lenkwellen-Abschnitt verbunden sein, der seinerseits mit dem Lenkgetriebe verbunden ist. Eine Zwischenschaltung noch weiterer Lenkwellen-Abschnitte ist grundsätzlich möglich.

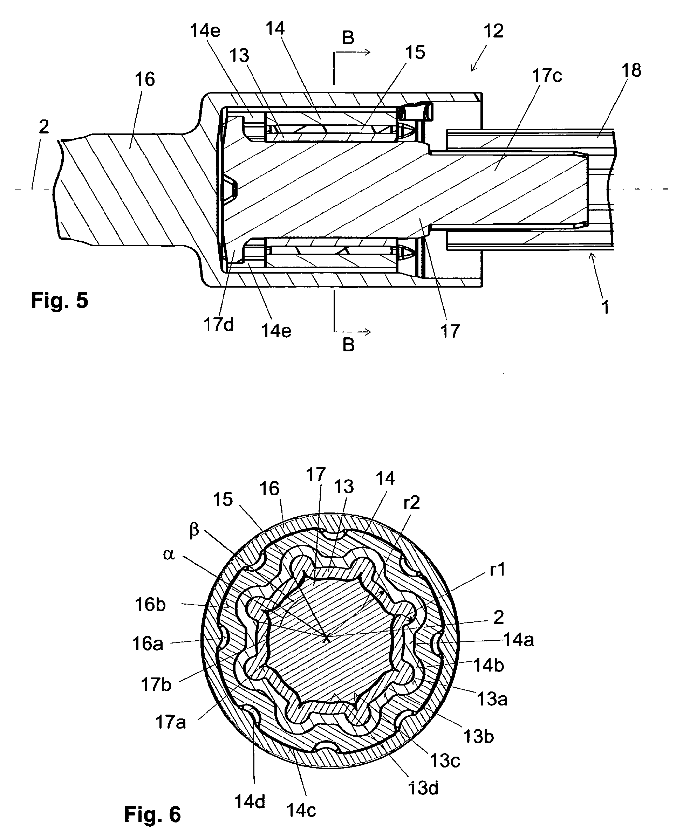

In den hinteren Lenkwellen-Abschnitt ist eine Dämpfungseinrichtung 12 integriert. Die Dämpfungseinrichtung 12 umfasst ein inneres Dämpferteil 13, das im Querschnitt gesehen (vgl. Fig. 6) eine von der Kreisform abweichende äußere Umfangskontur besitzt, und ein äußeres Dämpferteil 14, das im Querschnitt gesehen eine von der Kreisform abweichende innere Umfangskontur besitzt. Das äußere Dämpferteil 14 umgibt das innere Dämpferteil 13 ringförmig, d.h. das äußere Dämpferteil 14 ist hülsenförmig ausgebildet. Das innere und das äußere Dämpferteil 13, 14 liegen koaxial zueinander und koaxial zum hinteren Lenkwellen-Abschnitt 1, d.h. das innere und das äußere Dämpferteil 13, 14 sind um die Längsmittelachse 2 des hinteren Lenkwellen-Abschnitts drehbar.

Im radialen Zwischenraum zwischen dem inneren und dem äußeren Dämpferteil 13, 14 ist ein elastomeres Dämpfungsmaterial 15 angeordnet, welches eine Hülsenform ausbildet und im Querschnitt gesehen von der Kreisform abweichende innere und äußere Umfangskonturen besitzt.

Das innere und das äußere Dämpferteil 13, 14 stehen über das elastomere Dämpfungsmaterial bezogen auf die Drehung um die Längsmittelachse 2 in formschlüssigem Eingriff. Das innere und das äußere Dämpferteil 13, 14 sind also im Bezug auf eine Drehung um die Längsmittelachse 2 drehfest miteinander verbunden (abgesehen von den durch das elastomere Dämpfungsmaterial bewirkten Elastizitäten). Das innere und das äußere Dämpferteil 13, 14 sind weiters jeweils mit einem Wellenteil des hinteren Lenkwellen-Abschnitts 1 in Bezug auf eine Drehung um die Längsmittelachse 2 in drehfester Verbindung.

Wenn in dieser Schrift von einem Querschnitt durch die Dämpfungseinrichtung 12 oder durch ein Teil der Dämpfungseinrichtung 12 oder von einem Querschnitt durch den hinteren Lenkwellen-Abschnitt 1 oder ein Teil des hinteren Lenkwellen-Abschnitts 1 die Rede ist, so ist hierbei immer ein rechtwinkelig zur Längsmittelachse 2 des hinteren Lenkwellen-Abschnitts 1 bzw. der Dämpfungseinrichtung 12 stehender Querschnitt gemeint (entsprechend Fig. 6).

Im Querschnitt durch die Dämpfungseinrichtung 12 gesehen weist die innere Umfangskontur des äußeren Dämpferteils 14 (diese entspricht dem Querschnitt durch die innere Oberfläche des äußeren Dämpferteils 14) mehrere radial nach innen (also in Richtung zur Längsmittelachse 2) vorspringende innere Erhebungen 14a auf, zwischen denen innere Vertiefungen 14b der inneren Umfangskontur des äußeren Dämpferteils 14 liegen. In die Umfangsrichtung (=Drehrichtung) um die Längsmittelachse 2 aufeinanderfolgende innere Erhebungen 14a sind jeweils durch eine dazwischenliegende innere Vertiefung 14b voneinander beabstandet. Der Übergang zwischen einer jeweiligen inneren Erhebung 14a und daran anschließenden inneren Vertiefung 14b kann dort angesetzt werden, wo die innere Umfangskontur des äußeren Dämpferteils 14 die radiale Stelle überquert, die dem Mittelwert zwischen dem radial am weitesten innenliegenden Punkt der inneren Erhebung 14a und dem radial am weitesten außenliegenden Punkt der inneren Vertiefung 14b entspricht.

Im Querschnitt durch die Dämpfungseinrichtung 12 gesehen weist die äußere Umfangskontur des inneren Dämpferteils 13 (diese entspricht dem Querschnitt durch die äußere Oberfläche des inneren Dämpferteils 13) mehrere radial nach außen (also in die von der Längsmittelachse 2 weggerichtete Richtung) vorspringende äußere Erhebungen 13a auf, zwischen denen äußere Vertiefungen 13b der äußeren Umfangskontur des inneren Dämpferteils 13 liegen. In die Umfangsrichtung (=Drehrichtung) um die Längsmittelachse 2 aufeinanderfolgende äußere Erhebungen 13a sind jeweils durch eine dazwischenliegende äußere Vertiefung 13b voneinander beabstandet. Der Übergang zwischen einer jeweiligen äußeren Erhebung 13a und der daran anschließenden äußeren Vertiefung 13b kann dort angesetzt werden, wo die äußere Umfangskontur des inneren Dämpferteils 13 die radiale Stelle überquert, die dem Mittelwert zwischen dem radial am weitesten außen liegenden Punkt der äußeren Erhebung 13a und dem radial am weitesten innen liegenden Punkt der äußeren Vertiefung 13b entspricht.

Die äußeren Erhebungen 13a der äußeren Umfangskontur des inneren Dämpferteils 13 ragen in die inneren Vertiefungen 14b der inneren Umfangskontur des äußeren Dämpferteils 14, d.h. es besteht ein radialer Überlapp.

Im radialen Zwischenraum zwischen dem inneren Dämpferteil 13 und dem äußeren Dämpferteil 14 ist ein elastomeres Dämpfungsmaterial 15 angeordnet, dass diesen Zwischenraum vollständig vom elastomeren Dämpfungsmaterial 15 ausfüllt.

Beim elastomeren Dämpfungsmaterial 15 kann es sich insbesondere um ein Gummielastomer handeln. Auch andere elastomere Materialien, beispielsweise auch thermoplastische Elastomere könnten vorgesehen sein.

Das elastomere Dämpfungsmaterial 15 greift in die inneren Vertiefungen 14b des äußeren Dämpferteils 14 und in die äußeren Vertiefungen 13b des inneren Dämpferteils 13 ein und ist damit bezogen auf die Drehrichtung um die Längsmittelachse 2 formschlüssig sowohl mit dem äußeren Dämpferteil 14 als auch mit dem inneren Dämpferteil 13 verbunden.

Das Dämpfungsmaterial 15 ist sowohl mit der inneren Oberfläche des äußeren Dämpferteils 14 als auch mit der äußeren Oberfläche des inneren Dämpferteils 13 stoffschlüssig verbunden. Auch eine adhäsive Verbindung ist denkbar und möglich. Beispielsweise kann es an beiden Dämpferteilen 13, 14 anvulkanisiert sein. Auch eine Verklebung mit beiden Dämpferteilen 13, 14 oder ein Anvulkanisieren an eines der Dämpferteile 13, 14 und eine Verklebung mit dem anderen Dämpferteil 13, 14 ist beispielsweise möglich.
Im Querschnitt durch die Dämpfungseinrichtung gesehen weist die äußere Umfangskontur des inneren Dämpferteils 13 gekrümmte erste Abschnitte auf, welche die äußeren Erhebungen 13a bilden und welche in einen ersten Krümmungsradius r1 einbeschrieben sind. Es ist hierbei der Radius des kleinsten Kreises gemeint, der um die jeweilige Erhebung 13a gelegt werden kann. Zwischen diesen ersten Abschnitten liegen zweite Abschnitte der äußeren Umfangskontur des inneren Dämpferteils 13, welche somit in den Bereichen der äußeren Vertiefungen 13b liegen. Böden dieser zweiten Abschnitte besitzen einen zweiten Krümmungsradius r2 oder werden insgesamt von einem zweiten Krümmungsradius r2 gebildet, der größer als der erste Krümmungsradius r1 ist, vorzugsweise mehr als doppelt so groß, besonders bevorzugt mehr als dreimal so groß. Günstigerweise verlaufen die Böden der zweiten Abschnitte kreisbogenförmig um die Längsmittelachse 2 gekrümmt, wobei der zweite Krümmungsradius r2 also dem Radius eines um die Längsmittelachse 2 verlaufenden Kreises entspricht, auf dem die Böden der äußeren Vertiefungen 13d, zumindest abschnittsweise liegen. Es ist dies der kleinste Umschreibungskreis, auf dem zumindest ein Punkt der äußeren Umfangskontur des inneren Dämpferteils 13 liegt. Der zweite Krümmungsradius r2 könnte gegenüber dem Radius eines solchen kleinsten Umschreibungskreises beispielsweise auch um bis zu 30% größer oder kleiner sein.

Die Böden der äußeren Vertiefungen 13b weisen im gezeigten Ausführungsbeispiel also eine nach außen hin konvex gekrümmte Form auf.

Es liegen also nicht nur die Mittelpunkte der Krümmungsradien r1 sondern auch die Mittelpunkte der Krümmungsradien r2 innerhalb der äußeren Umfangskontur des inneren Dämpferteils 13.

Die gesamte äußere Umfangskontur des inneren Dämpferteils 13 ist somit, abgesehen von den Übergangsbereichen zwischen den Krümmungradien r1 und r2, nach außen hin konvex.

Auch ein geradliniger Verlauf oder eine von außen gesehen konkav gekrümmte Form der Böden der Vertiefungen 13b bzw. der genannten zweiten Abschnitte ist in einer modifizierten Ausführungsform denkbar und möglich.

Wenn man einen kleinsten Umschreibungskreis des inneren Dämpferteils 13 wie erwähnt als jenen Kreis definiert, der durch die radial am weitesten innen liegenden Punkte der äußeren Vertiefungen 13b verläuft, und einen größten Umschreibungskreis als einen Kreis definiert, der durch die radial am weitesten außen liegenden Punkte der äußeren Erhebungen 13a verläuft, so ist der Radius des größten Umschreibungskreises vorzugsweise um 10% bis 30% größer als der Radius des kleinsten Umschreibungskreises.

Die innere Umfangskontur des äußeren Dämpferteils 14 weist im Bereich der inneren Vertiefungen 14b vorzugsweise eine kreisbogenförmige Krümmung auf, die konzentrisch zur kreisbogenförmigen Krümmung eines jeweiligen der genannten ersten Abschnitte der äußeren Umfangskontur des inneren Dämpferteils 13 ist. Hierbei ist der Radius dieser kreisbogenförmigen Krümmung der inneren Umfangskontur im Bereich der inneren Vertiefung 14b um die Wandstärke des elastomeren Dämpfungsmaterials 15 größer als der Krümmungsradius r1.

Im Ausführungsbeispiel wird das innere Dämpferteil 13 von einer Hülse gebildet. Der erste Krümmungsradius r1 beträgt dann vorzugsweise das 0,8-1,2fache des Wertes der im Bereich einer der äußeren Vertiefungen 13b gemessenen Wandstärke dieser Hülse. Die äußeren Erhebungen 13a werden damit von zumindest weitgehend, günstigerweise zumindest teilweise vollständig, zusammengefalteten Abschnitten der Hülsenwand gebildet. Auf diese Weise kann eine stabile Ausbildung erreicht werden.

Der Winkelbereich α, über den sich eine jeweilige äußere Erhebung 13a in Umfangsrichtung (=Drehrichtung) um die Längsmittelachse 2 erstreckt, ist kleiner als der jeweilige Winkelbereich β, über den sich eine jeweilige äußere Vertiefung 13b in Umfangsrichtung um die Längsmittelachse 2 erstreckt.

Vorzugsweise ist der Winkelbereich β um 25% bis 50% größer, besonders bevorzugt um 30% bis 45% größer, als der Winkelbereich α.

Die an der äußeren Oberfläche des inneren Dämpferteils 13 ausgebildeten äußeren Erhebungen 13a und äußeren Vertiefungen 13b und die an der inneren Oberfläche des äußeren Dämpferteils 14 ausgebildeten inneren Erhebungen 14a und inneren Vertiefungen 14b verlaufen in axialer Richtung, also parallel zur Längsmittelachse 2.

Vorteilhafterweise sind um den Umfang des inneren Dämpferteils 13 mindestens vier äußere Erhebungen 13a und mindestens vier äußere Vertiefungen 13b vorhanden, wobei ein Wert von jeweils acht besonders bevorzugt ist. Das äußere Dämpferteil 14 weist eine entsprechende Anzahl von inneren Erhebungen 14a und inneren Vertiefungen 14b auf.

Das äußere Dämpferteil 14 ist drehfest mit einem ersten Wellenteil 16 des hinteren Lenkwellen-Abschnitts 1 verbunden. Dieses steht von der Dämpfungseinrichtung 12 in axialer Richtung des hinteren Lenkwellen-Abschnitts 1 ab, führt also von der Dämpfungseinrichtung 12 in eine Richtung entlang der Längsmittelachse 2 fort. Zur drehfesten Verbindung besitzt das äußere Dämpferteil 14 eine im Querschnitt durch die Dämpfungseinrichtung 12 gesehen von der Kreisform abweichende äußere Umfangskontur, welche von äußeren Erhebungen 14c und dazwischenliegenden äußeren Vertiefungen 14d gebildet wird, und das erste Wellenteil 16 besitzt einen hülsenförmigen Abschnitt mit einer im Querschnitt gesehen von der Kreisform abweichenden inneren Umfangskontur, welche von inneren Erhebungen 16a und dazwischenliegenden inneren Vertiefungen 16b gebildet wird. Durch die mit den äußeren Vertiefungen 14d in Eingriff stehenden inneren Erhebungen 16a und die mit den äußeren Erhebungen 14c in Eingriff stehenden inneren Vertiefungen 16b wird zwischen dem äußeren Dämpferteil 14 und dem ersten Wellenteil 16 ein Formschluss in Bezug auf die Drehrichtung um die Längsmittelachse 2 ausgebildet.

Die äußeren Vertiefungen 14d liegen jeweils im Winkelbereich (bezogen auf die Umfangsrichtung um die Längsmittelachse 2) einer der inneren Erhebungen 14a und die äußeren Erhebungen 14c umfassen jeweils den Winkelbereich (bezogen auf die Umfangsrichtung um die Längsmittelachse 2) einer der inneren Vertiefungen 14b.

Im Ausführungsbeispiel ist zwischen einer inneren Erhebung 16a des erste Wellenteils 16 und der äußeren Vertiefung 14d des äußeren Dämpferteils 14 ein radialer Spalt vorhanden.

Die Oberseiten der äußeren Erhebungen 14c und die Böden der inneren Vertiefungen 16b verlaufen zylindermantelförmig gekrümmt um die Längsmittelachse 2. In diesen Bereichen ist das Wellenteil 16 auf das äußere Dämpferteil 14 aufgepresst, sodass ein Presssitz ausgebildet ist.

Im Ausführungsbeispiel schließt an den hülsenförmigen Abschnitt des ersten Wellenteils 16, in welchem dieses das äußere Dämpferteil 14 umgibt, ein massiver Abschnitt des ersten Wellenteils 16 an. Denkbar und möglich wäre es auch, das erste Wellenteil 16 insgesamt hülsenförmig auszubilden.

Das im Ausführungsbeispiel hülsenförmig ausgebildete innere Dämpferteil 13 ist drehfest mit einem zweiten Wellenteil 17 verbunden. Hierzu weist das innere Dämpferteil 13 eine im Querschnitt gesehen von der Kreisform abweichende innere Umfangskontur auf. Diese wird von inneren Vertiefungen 13c gebildet, zwischen denen innere Erhebungen 13d liegen. Die inneren Vertiefungen 13c liegen jeweils im Winkelbereich (bezogen auf die Umfangsrichtung um die Längsmittelachse 2) einer der äußeren Erhebungen 13a und die inneren Erhebungen 13d umfassen jeweils den Winkelbereich (bezogen auf die Umfangsrichtung um die Längsmittelachse 2) einer der äußeren Vertiefungen 13b. Das zweite Wellenteil weist im Querschnitt durch die Dämpfungseinrichtung 12 gesehen eine von der Kreisform abweichende äußere Umfangskontur auf, welche von äußeren Erhebungen 17a gebildet werden, zwischen denen äußere Vertiefungen 17b liegen. Die äußeren Erhebungen 17a des zweiten Wellenteils stehen im Eingriff mit den inneren Vertiefungen 13c des inneren Dämpferteils 13 und die äußeren Vertiefungen 17b des zweiten Wellenteils stehen in Eingriff mit den inneren Erhebungen 13d des inneren Dämpferteils 13, wobei durch diese Eingriffe jeweils ein Formschluss bezogen auf die Drehrichtung um die Längsmittelachse 2 ausgebildet wird.

Die Böden der äußeren Vertiefungen 17b des zweiten Wellenteils 17 und den Oberseiten der inneren Erhebungen 13d des inneren Dämpferteils 13 verlaufen zylindermantelförmig gekrümmt um die Längsmittelachse 2. In diesen Bereichen ist das innere Dämpferteil 13 auf das zweite Wellenteil 17 aufgepresst, sodass ein Presssitz ausgebildet wird.

Das zweite Wellenteil 17 steht von der Dämpfungseinrichtung 12 in axialer Richtung des hinteren Lenkwellen-Abschnitts 1 ab, und zwar in die entgegengesetzte Richtung wie das erste Wellenteil 16. Der von der Dämpfungseinrichtung 12 abstehende Teil des zweiten Wellenteils 17 bildet hierbei einen Verbindungszapfen 17c, über welchen das zweite Wellenteil drehfest mit einem dritten Wellenteil 18 verbunden ist, welches vom zweiten Wellenteil in axialer Richtung des hinteren Lenkwellen-Abschnitts absteht (in die von der Dämpfungseinrichtung 12 abgelegene Richtung).

Das zweite Wellenteil 17 steht auch auf der Seite, auf der das erste Wellenteil 16 von der Dämpfungseinrichtung 12 wegführt über das innere und das äußere Dämpferteil 13, 14 axial vor. In diesem Bereich besitzt das zweite Wellenteil einen radial nach außen abstehenden Bund 17d. Dadurch wird eine axiale Auszugsicherung des zweiten Wellenteils 17 aus dem inneren Dämpferteil 13 gebildet. Der Bund 17d kann z.B. als Ringbund ausgebildet sein. Denkbar und möglich ist es, den Bund 17d mit einer von einer Kreisform abweichenden äußeren Umfangskontur mit Anlageflächen zu versehen, die bei sehr großen Verdrehmomenten zwischen dem ersten Wellenteil 16 und dem zweiten Wellenteil 17, oder dem dritten Wellenteil 18, mit Anlageabschnitten 14e, des äußeren Dämpferteils 14 oder direkt, wie hier nicht dargestellt, mit Anlageabschnitten des ersten Wellenteils 16 in Kontakt gebracht ist. Auf diese Weise kann eine Überbeanspruchung des Dämpfungsmaterials 15 vermieden werden.

Zur Sicherstellung einer Dauerhaltbarkeit eignen sich besonders Beschränkungen der maximal zulässigen Winkelverdrehungen im Bereich von 2° bis 6°.

Das zweite Wellenteil 17 kann im Sinterverfahren oder in einem Schmiedeverfahren einfach hergestellt werden. Je nach Ausführungsform ist auch eine Darstellung des zweiten Wellenteils im Strangpressverfahren denkbar und möglich.

Die Dämpfungseinrichtung 12 liegt also im Bereich der Längserstreckung des hinteren Lenkwellen-Abschnitts 1 und koaxial mit diesem. Beidseitig der Dämpfungseinrichtung 12, bezogen auf die axiale Richtung des hinteren Lenkwellen-Abschnitts 1, liegen Teile des hinteren Lenkwellen-Abschnitts 1.

Der hintere Lenkwellen-Abschnitt 1 ist über zumindest ein hinteres Drehlager 19 drehbar gelagert, welches im axialen Bereich zwischen der Dämpfungseinrichtung 12 und dem hinteren Ende 3 des hinteren Lenkwellen-Abschnitts 1 liegt. Weiters ist der hintere Lenkwellen-Abschnitt 1 über ein vorderes Drehlager 20 drehbar gelagert, welches im axialen Bereich zwischen der Dämpfungseinrichtung 12 und dem Kardangelenk 6 liegt.

Die in diesem Ausführungsbeispiel gezeigte Lenksäule ist in die Verstellrichtungen 21 und 22 verstellbar. Die Verstellrichtung 21 liegt parallel zur Längsmittelachse 2 und ermöglicht eine Längenverstellung. Hierzu umfasst der hintere Lenkwellen-Abschnitt zwei gegeneinander teleskopierbare Teilstücke. Eines dieser beiden gegeneinander teleskopierbaren Teilstücke wird vom zuvor beschriebenen dritten Wellenteil 18 gebildet. Das andere dieser teleskopierbaren Teilstücke wird von einem vierten Wellenteil 23 gebildet, welches sich bis zum hinteren Ende 3 des hinteren Lenkwellen-Abschnitts 1 erstreckt und über das hintere Drehlager 19 gegenüber einer Manteleinheit 24 der Lenksäule drehbar gelagert ist. Die Manteleinheit 24 ist im geöffneten Zustand einer Feststellvorrichtung 25 gegenüber einer Schwenkeinheit 26 in die Verstellrichtung 21 verstellbar. Im geschlossenen Zustand der Feststellvorrichtung ist die Manteleinheit 24 mit der Schwenkeinheit 26 verklemmt. Zur Verstellung der Lenksäule in die Verstellrichtung 22, welche eine Höhen- bzw. Neigungs-verstellung der Lenksäule darstellt, ist die Schwenkeinheit 26 im geöffneten Zustand der Feststellvorrichtung 25 gegenüber einer Montageeinheit 27 um eine Schwenkachse 28, die horizontal und rechtwinkelig zur Längsmittelachse 2 liegt, verschwenkbar. Im geschlossenen Zustand der Feststellvorrichtung 25 ist die Schwenkeinheit 26 zwischen Seitenschenkeln 27a, 27b der Montageeinheit verklemmt.

Die Montageeinheit 27 wird am Fahrzeugchassis montiert.

Die Fixierung der eingestellten Position im geschlossenen Zustand der Feststellvorrichtung 25 kann durch reibschlüssig und/oder formschlüssig zusammenwirkende Elemente erfolgen, wie dies bekannt ist. Zum Öffnen und Schließen der Feststellvorrichtung ist ein Betätigungshebel 25a dargestellt. Stattdessen könnte auch mindestens ein elektrisch betriebenes Antriebsmittel vorgesehen sein.

Der hintere Lenkwellen-Abschnitt 1, insbesondere das erste Wellenteil 16, ist vom vorderen Drehlager 20 gegenüber der Schwenkeinheit 26 drehbar gelagert.

Die Dämpfungseinrichtung 12 liegt im Ausführungsbeispiel im Bereich des vorderen Endes der den hinteren Lenkwellen-Abschnitt 1 lagernden und tragenden Teile der Lenksäule.

Die Dämpfungseinrichtung 12 ist in Bezug auf axiale Auslenkungen zwischen dem inneren und dem äußeren Dämpferteil 13, 14 viel weicher als in Bezug auf Auslenkungen in die Drehrichtung um die Längsmittelachse 2, vorzugsweise mehr als dreimal elastischer in die axiale Richtung als in die Drehrichtung. Durch den Eingriff der äußeren Erhebungen 13a des inneren Dämpferteils 13 in die inneren Vertiefungen 14b des äußeren Dämpferteils 14 wird das in diesen Bereichen dazwischenliegende elastomere Dämpfungsmaterial 15 bei einer Belastung in Drehrichtung zumindest im Wesentlichen komprimiert (=die einwirkende Kraft liegt zumindest im Wesentlichen parallel zur Oberflächennormalen auf das Dämpfungsmaterial 15), wird also zumindest im Wesentlichen nicht auf Scherung belastet. Die Elastizität für eine Komprimierung ist aber wesentlich geringer als bei einer Scherbelastung. Bei einer axialen Auslenkung zwischen dem inneren und dem äußeren Dämpferteil 13, 14 kommt es dagegen zumindest im Wesentlichen zu einer Scherbelastung des Dämpfungsmaterials 15.

Im Ausführungsbeispiel ist das innere Dämpferteil 13 antriebsseitig angeordnet und wird vom antriebsseitig mit der Dämpfungseinrichtung verbundenen Wellenteil 17 angetrieben. Das äußere Dämpferteil 14 ist abtriebsseitig angeordnet und treibt das mit ihm verbundene Wellenteil 16 an. Auch eine antriebsseitige Anordnung des äußeren Dämpferteils 14 und eine abtriebsseitige Anordnung des inneren Dämpferteils 13 ist möglich.

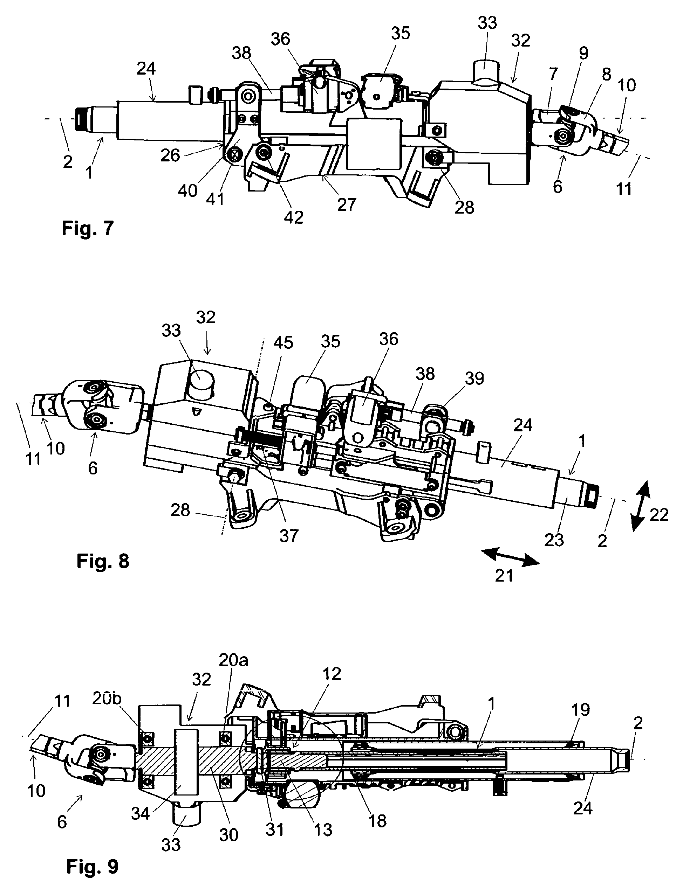

Ein zweites Ausführungsbeispiel der Erfindung ist in den Fig. 7 bis 13 dargestellt. Dieses entspricht dem zuvor beschriebenen Ausführungsbeispiel abgesehen von den im Folgenden erläuterten Unterschieden. Analoge Teile sind mit den gleichen Bezugszeichen versehen.

In diesem Ausführungsbeispiel ist das innere Dämpferteil 13 einstückig mit einem axial von der Dämpfungseinrichtung 12 abstehenden Verbindungszapfen 29 ausgebildet, der drehfest mit dem dritten Wellenteil 18 verbunden ist. Dieses das innere Dämpferteil 13 und den Verbindungszapfen 29 umfassende Bauteil wirkt also über einen Abschnitt seiner axialen Erstreckung über das Dämpfungsmaterial 15 mit dem äußeren Dämpferteil 14 zusammen und bildet in diesem axialen Abschnitt seiner Erstreckung das innere Dämpferteil 13. Dieses innere Dämpferteil 13 ist hier massiv ausgebildet. Eine hülsenförmige Ausbildung des inneren Dämpferteils 13 und/oder des Verbindungszapfens 29 wäre aber ebenfalls möglich. Die äußere Oberfläche des inneren Dämpferteils 13 bzw. im Querschnitt gesehen die äußere Umfangskontur des inneren Dämpferteils 13 entspricht von der Form her der entsprechenden Beschreibung des inneren Dämpferteils 13 des ersten Ausführungsbeispiels.

Das zweite Wellenteil 17 des ersten Ausführungsbeispiels entfällt somit in diesem zweiten Ausführungsbeispiel.

Das erste Wellenteil 16 entspricht in demjenigen axialen Bereich, in welchem es mit dem äußeren Dämpferteil 14 in Eingriff steht, dem ersten Wellenteil 16 des ersten Ausführungsbeispiels. In diesem Ausführungsbeispiel ist das erste Wellenteil 16 aber insgesamt hülsenförmig ausgebildet und mit einem weiteren Wellenteils 30 durch eine Verstiftung mit einem Verbindungsstift 31 verbunden.

Im Übrigen ist die Dämpfungseinrichtung 12 gleich wie im zuvor beschriebenen ersten Ausführungsbeispiel ausgebildet.

Die Lenksäule umfasst hier eine elektrische Hilfskrafteinrichtung 32, die nur stark schematisiert dargestellt ist. Das Wellenteil 30 ist Teil dieser elektrischen Hilfskrafteinrichtung 32. Die elektrische Hilfskrafteinrichtung 32 weist einen Elektromotor 33 und Getriebeglieder 34 auf, über welche der Elektromotor 33 mit dem hinteren Lenkwellen-Abschnitt 1 in Verbindung steht. Beispielsweise kann von der elektrischen Hilfskrafteinrichtung eine Hilfskraft in die Lenkwelle eingeleitet werden, von der eine Lenkbewegung des Fahrers unterstützt wird. Auch kann vom Elektromotor 33 eine Hilfskraft ausgeübt werden, um beispielsweise eine Übersetzung des vom Fahrer eingestellten Lenkwinkels oder um eine vom Fahrer unabhängige Lenkbewegung durchzuführen.

Solche elektrischen Hilfskrafteinrichtungen sind in unterschiedlichen Ausführungsformen bekannt.

Die elektrische Hilfskrafteinrichtung 32 ist im hinteren Lenkwellen-Abschnitt zwischen der Dämpfungseinrichtung 12 und dem Kardangelenk 6 angeordnet.

Im Bereich der elektrischen Hilfskrafteinrichtung 32 sind vordere Drehlager 20a, 20b angeordnet, von denen eine Lagerung des hinteren Lenkwellen-Abschnitts 1 erfolgt, hier im Bereich des Wellenteils 30.

Die Lenksäule gemäß dieser zweiten Ausführungsform der Erfindung ist wiederum in die Verstellrichtungen 21, 22 verstellbar, wobei hier die Verstellung durch elektrische Antriebsmittel 35, 36 erfolgt. Das elektrische Antriebsmittel 35 ist ein Elektromotor, von dem eine Spindelmutter gedreht wird, die auf einer Gewindespindel 37 angeordnet ist. Durch Verdrehung der Gewindemutter erfolgt eine Längenverstellung in die Verstellrichtung 21, bei welcher die das vierte Wellenteil 23 drehbar lagernde Manteleinheit 24 gegenüber der Schwenkeinheit 26 in die Verstellrichtung 21 verschoben wird. Hierzu ist das elektrische Antriebsmittel 35 mit der Manteleinheit 24 und die Gewindespindel 37 mit der Schwenkeinheit 26 bezogen auf die Verstellrichtung 21 unverschiebbar verbunden.

Die Schwenkeinheit 26 ist um die Schwenkachse 28 gegenüber der am Fahrzeugchassis befestigbaren Montageeinheit 27 verschwenkbar gelagert. Zur Verstellung in die Verstellrichtung 22 dient das elektrische Antriebsmittel 36. Dieses ist in Form eines Elektromotors ausgebildet, der die Gewindespindel 38 um ihre Achse dreht. Auf der Gewindespindel 38 ist eine Spindelmutter 39 angeordnet, die mit dem Stellhebel 40 gelenkig verbunden ist. Der Stellhebel 40 ist an der Schwenkeinheit 26 um die Schwenkachse 41 und an der Montageeinheit 27 um die Schwenkachse 42 verschwenkbar gelagert, wobei die Schwenkachsen 41, 42 parallel zur Schwenkachse 28 liegen. Bei der Verschwenkung des Stellhebels 40 um die Schwenkachse 42 wird die Schwenkeinheit 26 um die Schwenkachse 28 verschwenkt. Die Schwenkachse 28 kann sich hierbei gegenüber der Montageeinheit 27 in die Richtung der Längsmittelachse 2 etwas verschieben (durch die Anordnung eines diese Schwenkachse bildenden Bolzens in Langlöchern der Montageeinheit 27).

Die Verstellung in die Verstellrichtungen 21, 22 könnte in einer Modifikation der zweiten Ausführungsform auch manuell erfolgen, analog wie im ersten Ausführungsbeispiel beschrieben.

Auf dem ersten Wellenteil 16 ist in diesem zweiten Ausführungsbeispiel ein Raststern 43 angeordnet. Durch den Raststern 43 und ein mit diesem in Eingriff bringbares Rastelement kann eine Wegfahrsperre realisiert werden. Durch eine entsprechende Auslegung des Pressverbandes zwischen dem Raststern 43 und dem ersten Wellenteil 16 kann in einfacher Weise eine gewünschte Verdrehfestigkeit für den Raststern 43, beispielsweise von 200Nm, realisiert werden, bei deren Überschreiten ein Durchrutschen des Raststerns 43 gegenüber dem ersten Wellenteil 16 ermöglicht wird.

Der Raststern 43 kann in der zweiten Ausführungsform auch entfallen bzw. es könnte in der ersten Ausführungsform auch ein solcher Raststern vorgesehen sein.

Durch eine lösbare Verbindung des Verbindungszapfens 29 mit dem dritten Wellenteil 18 und eine lösbare Ausbildung der Verstiftung mit dem Verbindungsstift 31 kann eine einfache Demontagemöglichkeit der Dämpfungseinrichtung 12 vorgesehen sein. Die Hilfskrafteinrichtung 32 kann ebenfalls über mindestens eine Verschraubung 45 mit der Schwenkeinheit 26 verbunden sein, sodass Wartungsarbeiten unter Auftrennung der Lenkwelle einfach ermöglicht werden. Die Verschraubungen können entweder über spezielle Zwischenstücke und/oder über Gummizwischenlagen (nicht dargestellt) akustisch entkoppelt werden.

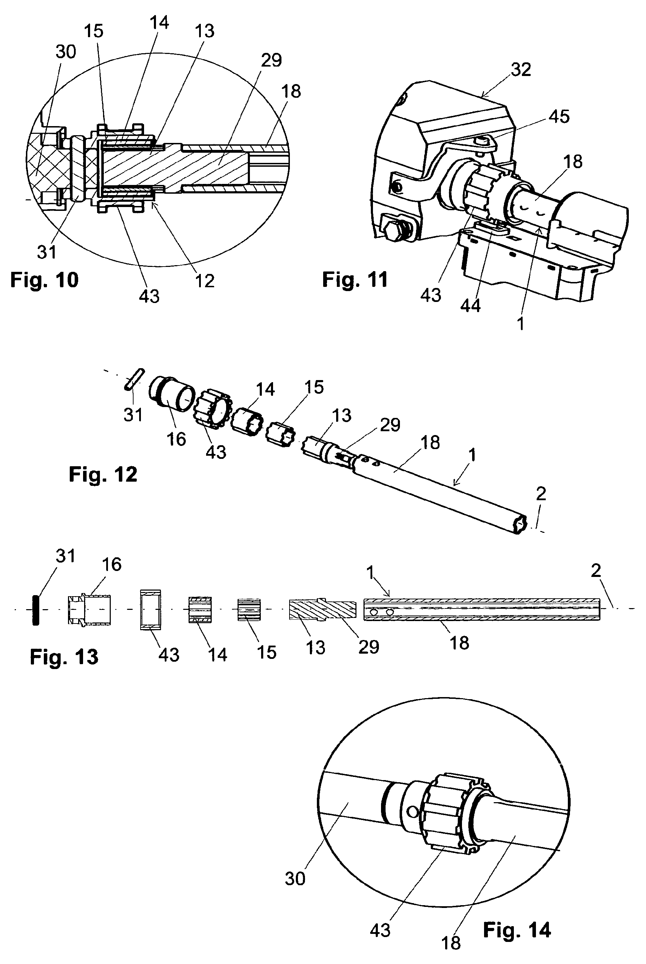

Fig. 14 zeigt eine geringfügige Modifikation der zweiten Ausbildungsform ohne eine Hilfskrafteinrichtung.

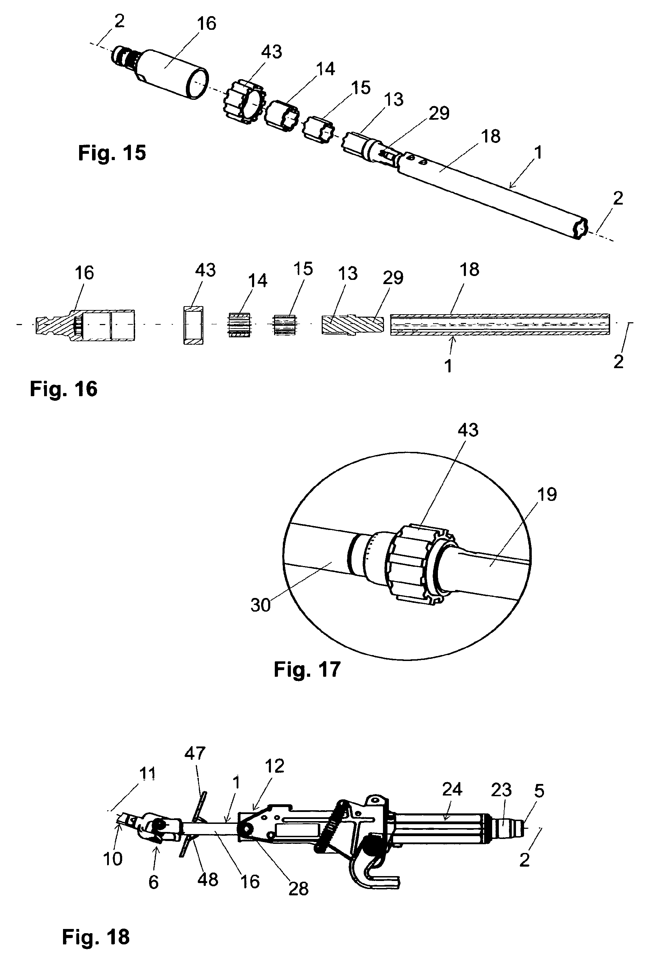

Fig. 15 zeigt eine Darstellung entsprechend den Fig. 12 und 13, wobei die Ausbildung dahingehend modifiziert ist, dass das erste Wellenteil 16 statt durch eine Verstiftung durch einen eingepressten Verbindungszapfen 46 mit einem weiteren Teil des hinteren Lenkwellen-Abschnitts 1 oder mit der hinteren Gelenkgabel 7 des Kardangelenks 6 durch eine Pressverbindung verbunden ist. Fig. 17 zeigt die Modifikation gegenüber Fig. 14 dahingehend, dass anstelle der Verstiftung eine solche Pressverbindung mit einem weiteren Wellenteil vorhanden ist.

Fig. 18 zeigt eine Modifikation der ersten Ausführungsform, wobei das erste Wellenteil 16 gegenüber dem ersten Ausführungsbeispiel verlängert ausgebildet ist und durch eine Spritzwand (="dash board") durchgeführt ist, welche den Fahrgastraum vom Motorraum abtrennt. Im Bereich dieser Durchführung ist eine Abdichtung des ersten Wellenteils 16 gegenüber der Spritzwand 47 ausgebildet. Es ist zu diesem Zweck eine Dichtmanschette 48 dargestellt, die auch als Lagerung für den hinteren Lenkwellen-Abschnitt 1 ausgebildet sein kann.

Eine erfindungsgemäße Lenksäule könnte auch nur in die Verstellrichtung 21 oder nur in die Verstellrichtung 22 verstellbar ausgebildet sein oder unverstellbar sein.

Soweit anwendbar sind alle in den einzelnen Ausführungsformen gezeigten Merkmale untereinander frei kombinierbar ohne den Bereich der Erfindung zu verlassen.

**Legende**

| | | | |
|---|---|---|---|
| zu den Hinweisziffern: | | | |
| 1 | hinterer Lenkwellen-Abschnitt | 17b | äußere Vertiefung |
| 2 | Längsmittelachse | 17c | Verbindungszapfen |
| 3 | hinteres Ende | 17d | Bund |
| 4 | Lenkrad | 18 | drittes Wellenteil |
| 5 | vorderes Ende | 19 | hinteres Drehlager |
| 6 | Kardangelenk | 20 | vorderes Drehlager |
| 7 | hintere Gelenkgabel | 20a | vorderes Drehlager |
| 8 | vordere Gelenkgabel | 20b | vorderes Drehlager |
| 9 | Zapfenkreuz | 21 | Verstellrichtung |
| 10 | weiterer Lenkwellen-Abschnitt | 22 | Verstellrichtung |
| 11 | Längsmittelachse | 23 | viertes Wellenteil |
| 12 | Dämpfungseinrichtung | 24 | Montageeinheit |
| 13 | inneres Dämpferteil | 25 | Feststellvorrichtung |
| 13a | äußere Erhebung | 25a | Betätigungshebel |
| 13b | äußere Vertiefung | 26 | Schwenkeinheit |
| 13c | innere Vertiefung | 27 | Montageeinheit |
| 13d | innere Erhebung | 27a | Seitenschenkel |
| 14 | äußeres Dämpferteil | 27b | Seitenschenkel |
| 14a | innere Erhebung | 28 | Schwenkachse |
| 14b | innere Vertiefung | 29 | Verbindungszapfen |
| 14c | äußere Erhebung | 30 | Wellenteil |
| 14d | äußere Vertiefung | 31 | Verbindungsstift |
| 14e | Anlageabschnitt | 32 | elektrische Hilfskrafteinrichtung |
| 15 | Dämpfungsmaterial | 33 | Elektromotor |
| 16 | erstes Wellenteil | 34 | Getriebeglied |
| 16a | innere Erhebung | 35 | elektrisches Antriebsmittel |
| 16b | innere Vertiefung | 36 | elektrisches Antriebsmittel |
| 17 | zweites Wellenteil | 37 | Gewindespindel |
| 17a | äußere Erhebung | 38 | Gewindespindel |
| 39 | Spindelmutter | 44 | Rastelement |
| 40 | Stellhebel | 45 | Verschraubung |
| 41 | Schwenkachse | 46 | Verbindungszapfen |
| 42 | Schwenkachse | 47 | Spritzwand |
| 43 | Raststern | 48 | Dichtmanschette |

## Patentansprüche

1. Lenksäule für ein Kraftfahrzeug mit einer Lenkwelle, wobei eine Dämpfungseinrichtung (12) zur Dämpfung von über die Lenkwelle übertragenen Vibrationen vorgesehen ist, welche ein um eine Längsmittelachse (2) drehbares inneres Dämpferteil (13), dessen äußere Umfangskontur im Querschnitt durch die Dämpfungseinrichtung (12) gesehen mehrere in Umfangsrichtung um die Längsmittelachse (2) voneinander beabstandete radial nach außen vorspringende äußere Erhebungen (13a) aufweist, zwischen denen äußere Vertiefungen (13b) der äußeren Umfangskontur des inneren Dämpferteils (13) liegen, wobei der Übergang zwischen einer jeweiligen äußeren Erhebung (13a) und einer daran anschließenden äußeren Vertiefung (13b) dort liegt, wo die äußere Umfangskontur des inneren Dämpferteils (13) die radiale Stelle überquert, die dem Mittelwert zwischen dem radial am weitesten außen liegenden Punkt der äußeren Erhebung (13a) und dem radial am weitesten innen liegenden Punkt der äußeren Vertiefung (13b) entspricht, ein das innere Dämpferteile (13) umgebendes um die Längsmittelachse (2) drehbares äußeres Dämpferteil (14), dessen innere Umfangskontur im Querschnitt durch die Dämpfungseinrichtung (12) gesehen mehrere in Umfangsrichtung um die Längsmittelachse (2) des hinteren Lenkwellen-Abschnitts (1) voneinander beabstandete radial nach innen vorspringende innere Erhebungen (14a) aufweist, zwischen denen innere Vertiefungen (14b) der inneren Umfangskontur des äußeren Dämpferteils (14) liegen, wobei der Übergang zwischen einer jeweiligen inneren Erhebung (14a) und einer daran anschließenden inneren Vertiefung (14b) dort liegt, wo die innere Umfangskontur des äußeren Dämpferteils (14) die radiale Stelle überquert, die dem Mittelwert zwischen dem radial am weitesten innen liegenden Punkt der inneren Erhebung (14a) und dem radial am weitesten außen liegenden Punkt der inneren Vertiefung (14b) entspricht, und ein in einem radialen Zwischenraum zwischen dem inneren Dämpferteil (13) und dem äußeren Dämpferteil (14) angeordnetes elastomeres Dämpfungsmaterial (15) umfasst, welches den Zwischenraum zwischen dem inneren Dämpferteil (13) und dem äußeren Dämpferteil (14) vollständig ausfüllt, wobei der Winkelbereich (α), über den sich eine jeweilige äußere Erhebung (13a) der äußeren Umfangskontur des inneren Dämpferteils (13) in Umfangsrichtung um die Längsmittelachse (2) erstreckt, kleiner als der jeweilige Winkelbereich (β) ist, über den sich eine jeweilige äußere Vertiefung (13b) der äußeren Umfangskontur des inneren Dämpferteils (13) in Umfangsrichtung um die Längsmittelachse (2) erstreckt, **dadurch gekennzeichnet, dass** das elastomere Dämpfungsmaterial (15) sowohl mit der inneren Oberfläche des äußeren Dämpferteils (14) als auch mit der äußeren Oberfläche des inneren Dämpferteils (13) stoffschlüssig und/oder adhäsiv verbunden ist.

2. Lenksäule nach Anspruch 1, **dadurch gekennzeichnet, dass** die Dicke des elastomeren Dämpfungsmaterials (15) im Querschnitt rechtwinkelig zur Längsmittelachse gesehen entlang des gesamten Umfangs im Wesentlichen konstant ist.

3. Lenksäule nach Anspruch 1 oder 2, **dadurch gekennzeichnet, dass** der jeweilige Winkelbereich (β), über den sich eine jeweilige äußere Vertiefung (13b) der äußeren Umfangskontur des inneren Dämpferteils in Umfangsrichtung um die Längsmittelachse (2) erstreckt, um 25% bis 50% größer ist als der Winkelbereich (α), über den sich eine jeweilige äußere Erhebung (13a) der äußeren Umfangskontur des inneren Dämpferteils (13) in Umfangsrichtung um die Längsmittelachse (2) erstreckt.

4. Lenksäule nach Anspruch 1 bis 3, **dadurch gekennzeichnet, dass** die äußeren Erhebungen (13a) der äußeren Umfangskontur des inneren Dämpferteils (13) in die inneren Vertiefungen (14b) der inneren Umfangskontur des äußeren Dämpferteils (14) ragen.

5. Lenksäule nach einem der Ansprüche 1 bis 4, **dadurch gekennzeichnet, dass** im Querschnitt durch die Dämpfungseinrichtung (12) gesehen die äußere Umfangskontur des inneren Dämpferteils (13) gekrümmte erste Abschnitte aufweist, welche die äußeren Erhebungen (13a) bilden, wobei die von den ersten Abschnitten gebildeten äußeren Erhebungen (13a) in einem ersten Krümmungsradius (r1) einbeschrieben sind, und zweite Abschnitte aufweist, welche zwischen den ersten Abschnitten in den Bereichen der äußeren Vertiefungen (13b) liegen und welche Böden aufweisen, die einen zweiten Krümmungsradius (r2) besitzen, der größer als der erste Krümmungsradius (r1) ist, oder die geradlinig verlaufen.

6. Lenksäule nach Anspruch 5, **dadurch gekennzeichnet, dass** der zweite Krümmungsradius (r2) mehr als doppelt so groß, vorzugsweise mehr als dreimal so groß, wie der erste Krümmungsradius (r1) ist.

7. Lenksäule nach einem der Ansprüche 1 bis 6, **dadurch gekennzeichnet, dass** die äußeren Vertiefungen (13b) Böden aufweisen, die im Querschnitt durch die Dämpfungseinrichtung gesehen eine nach außen konvex gekrümmte Form aufweisen oder geradlinig verlaufen.

8. Lenksäule nach einem der Ansprüche 5 bis 7, **dadurch gekennzeichnet, dass** die ersten und zweiten Krümmungsradien (r1, r2) um Mittelpunkte verlaufen, die innerhalb der äußeren Umfangskontur des inneren Dämpferteils (13) liegen.

9. Lenksäule nach einem der Ansprüche 5 bis 8, **dadurch gekennzeichnet, dass** das innere Dämpferteil (13) von einer Hülse gebildet wird und der erste Krümmungsradius (r1) das 0,8- 1,2fache des Wertes der im Bereich einer der äußeren Vertiefungen (13b) gemessenen Wandstärke dieser Hülse beträgt.

10. Lenksäule nach einem der Ansprüche 1 bis 9, **dadurch gekennzeichnet, dass** der Radius eines größten Umschreibungskreises des inneren Dämpferteils (13), der durch die radial am weitesten außen liegenden Punkte der äußeren Erhebungen (13a) verläuft, um 10% bis 30% größer ist als der Radius eines kleinsten Umschreibungskreises des inneren Dämpferteils (13) ist, der durch die radial am weitesten innen liegenden Punkte der äußeren Vertiefungen (13b) verläuft.

11. Lenksäule nach einem der Ansprüche 1 bis 10, **dadurch gekennzeichnet, dass** das äußere Dämpferteil (14) eine im Querschnitt durch die Dämpfungseinrichtung (12) gesehen von der Kreisform abweichende äußere Umfangskontur aufweist, mit der es mit einer im Querschnitt durch die Dämpfungseinrichtung (12) gesehen von der Kreisform abweichenden inneren Umfangskontur eines hülsenförmigen Abschnitts eines ersten Welltenteils (16) der Lenkwelle in einem in Bezug auf die Drehrichtung um die Längsmittelachse (2) formschlüssigen Eingriff steht, wobei das erste Wellenteil (16) vorzugsweise von der Dämpfungseinrichtung (12) in Richtung der Längsmittelachse (2) absteht.

12. Lenksäule nach einem der Ansprüche 1 bis 11, **dadurch gekennzeichnet, dass** das innere Dämpferteil (13) eine im Querschnitt gesehen von der Kreisform abweichende innere Umfangskontur aufweist, mit der es mit einer im Querschnitt gesehen von der Kreisform abweichenden äußeren Umfangskontur eines Abschnitts eines zweiten Wellenteils (17) der Lenkwelle in einem in Bezug auf die Drehrichtung um die Längsmittelachse (2) formschlüssigen Eingriff steht, wobei das zweite Wellenteil (17) vorzugsweise von der Dämpfungseinrichtung (12) in Richtung der Längsmittelachse (2) absteht.

13. Lenksäule nach Anspruch 11 und Anspruch 12, **dadurch gekennzeichnet, dass** das zweite Wellenteil (17) auch auf der Seite, auf der das erste Wellenteil (16) von der Dämpfungseinrichtung wegführt über das innere und das äußere Dämpferteil (13, 14) axial vorsteht und in diesem Bereich einen radial nach außen abstehenden Bund (17d) aufweist, der als Ringbund ausgebildet ist und eine von einer Kreisform abweichene äußere Umfangskontur mit Anlageflächen besitzt, die bei sehr großen Verdrehmomenten zwischen dem ersten Wellenteils (16) und dem zweiten Wellenteil (17) mit Anlageabschnitten (14e) des äußeren Dämpferteils (14) oder direkt mit Anlageabschnitten des ersten Wellenteils (16) in Kontakt gebracht sind.

14. Lenksäule nach einem der Ansprüche 1 bis 13, **dadurch gekennzeichnet, dass** das zweite Wellenteil (17) mit einem dritten Wellenteil (18) drehfest verbunden ist, wobei das dritten Wellenteil (18) vorzugsweise vom zweiten Wellenteil (17) in Richtung der Längsmittelachse (2) absteht.

15. Lenksäule nach einem der Ansprüche 1 bis 14, **dadurch gekennzeichnet, dass** die Lenkwelle einen hinteren Lenkwellen-Abschnitt (1), der geradlinig verläuft und um die Längsmittelachse (2) drehbar ist und an dem an einem hinteren Ende (3) ein Lenkrad (4) montierbar ist, und zumindest einen weiteren Lenkwellen-Abschnitt (10) umfasst, der mit dem hinteren Lenkwellen-Abschnitt (1) über ein Kardangelenk (6) verbunden ist, welches eine hintere Gelenkgabel (7), eine vordere Gelenkgabel (8) und ein die hintere Gelenkgabel (7) und die vordere Gelenkgabel (8) verbindendes Zapfenkreuz (9) umfasst, wobei die Dämpfungseinrichtung (12) in den hinteren Lenkwellen-Abschnitt (1) integriert ist, wobei der hintere Lenkwellen-Abschnitt (1) über zumindest ein vorderes Drehlager (20) drehbar gelagert ist, welches zwischen der Dämpfungseinrichtung (12) und dem Kardangelenk (6) liegt, und der hintere Lenkwellen-Abschnitt (1) zumindest über ein hinteres Drehlager (19) drehbar gelagert ist, welches zwischen der Dämpfungseinrichtung (12) und dem hinteren Ende (3) des hinteren Lenkwellen-Abschnitts (1) liegt.

16. Lenksäule nach Anspruch 15, **dadurch gekennzeichnet, dass** die Lenksäule eine elektrische Hilfskrafteinrichtung (32) aufweist, wobei die Dämpfungseinrichtung (12) zwischen dem hinteren Ende des hinteren Lenkwellen-Abschnitts (1) und der elektrischen Hilfskrafteinrichtung (32) angeordnet ist.

17. Lenksäule nach Anspruch 15 oder 16, **dadurch gekennzeichnet, dass** die Lenksäule zumindest in ihrer Länge verstellbar ist, wobei der hintere Lenkwellen-Abschnitt (1) zwei gegeneinander teleskopierbare Wellenteile (18, 23) umfasst.

## Claims

1. A steering column for a motor vehicle with a steering shaft, wherein a damping means (12) for damping vibrations transmitted via the steering shaft is provided which comprises: an inner damper part (13) rotatable about a longitudinal centre axis (2), the outer peripheral contour of which, viewed in cross-section through the damping means (12), has a plurality of radially outward-projecting outer elevations (13a) spaced apart in the peripheral direction about the longitudinal centre axis (2), between which elevations outer depressions (13b) of the outer peripheral contour of the inner damper part (13) lie, wherein the transition between a respective outer elevation (13a) and an adjoining outer depression (13b) is located where the outer peripheral contour of the inner damper part (13) crosses the radial point which corresponds to the mean between that point of the outer elevation (13a) which is radially farthest to the outside and that point of the outer depression (13b) which is radially farthest to the inside; an outer damper part (14) which surrounds the inner damper part (13) and which is rotatable about the longitudinal centre axis (2), the inner peripheral contour of which part, viewed in cross-section through the damping means (12), has a plurality of radially inward-projecting inner elevations (14a) spaced apart from one another in the peripheral direction about the longitudinal centre axis (2) of the rear steering-shaft portion (1), between which elevations inner depressions (14b) of the inner peripheral contour of the outer damper part (14) lie, wherein the transition between a respective inner elevation (14a) and an adjoining inner depression (14b) is located where the inner peripheral contour of the outer damper part (14) crosses the radial point which corresponds to the mean between that point of the inner elevation (14a) which is radially farthest to the inside and that point of the inner depression (14b) which is radially farthest to the outside; and an elastomeric damping material (15) arranged in a radial space between the inner damper part (13) and the outer damper part (14), which material completely fills the space between the inner damper part (13) and the outer damper part (14), wherein the angular range (α) over which a respective outer elevation (13a) of the outer peripheral contour of the inner damper part (13) extends in the peripheral direction about the longitudinal centre axis (2) is smaller than the respective angular range (β) over which a respective outer depression (13b) of the outer peripheral contour of the inner damper part (13) extends in the peripheral direction about the longitudinal centre axis (2); **characterised in that** the elastomeric damping material (15) is connected in a substance-to-substance bond and/or adhesively both to the inner surface of the outer damper part (14) and to the outer surface of the inner damper part (13).

2. A steering column according to Claim 1, **characterised in that** the thickness of the elastomeric damping material (15), viewed in cross-section at right-angles to the longitudinal centre axis, is substantially constant along the entire periphery.

3. A steering column according to Claim 1 or 2, **characterised in that** the respective angular range (β) over which a respective outer depression (13b) of the outer peripheral contour of the inner damper part extends in the peripheral direction about the longitudinal centre axis (2) is 25% to 50% greater than the angular range (α) over which a respective outer elevation (13a) of the outer peripheral contour of the inner damper part (13) extends in the peripheral direction about the longitudinal centre axis (2).

4. A steering column according to Claims 1 to 3, **characterised in that** the outer elevations (13a) of the outer peripheral contour of the inner damper part (13) project into the inner depressions (14b) of the inner peripheral contour of the outer damper part (14).

5. A steering column according to one of Claims 1 to 4, **characterised in that**, viewed in cross-section through the damping means (12), the outer peripheral contour of the inner damper part (13) has curved first portions which form the outer elevations (13a), the outer elevations (13a) formed by the first portions being inscribed in a first radius of curvature (r1), and has second portions which lie between the first portions in the regions of the outer depressions (13b) and which have bases which have a second radius of curvature (r2) which is greater than the first radius of curvature (r1), or which run in rectilinear manner.

6. A steering column according to Claim 5, **characterised in that** the second radius of curvature (r2) is more than twice as large, preferably more than three times as large, as the first radius of curvature (r1).

7. A steering column according to one of Claims 1 to 6, **characterised in that** the outer depressions (13b) have bases which, viewed in cross-section through the damping means, have an outward convexly curved shape or run in rectilinear manner.

8. A steering column according to one of Claims 5 to 7, **characterised in that** the first and second radii of curvature (r1, r2) extend about centres which lie inside the outer peripheral contour of the inner damper part (13).

9. A steering column according to one of Claims 5 to 8, **characterised in that** the inner damper part (13) is formed by a sleeve, and the first radius of curvature (r1) is 0.8-1.2 times the value of the wall thickness of this sleeve measured in the region of one of the outer depressions (13b).

10. A steering column according to one of Claims 1 to 9, **characterised in that** the radius of a maximum circumscribed circle of the inner damper part (13) which extends through the points of the outer elevations (13a) lying radially farthest to the outside is 10% to 30% greater than the radius of a minimum circumscribed circle of the inner damper part (13) which extends through the points of the outer depressions (13b) radially farthest to the inside.

11. A steering column according to one of Claims 1 to 10, **characterised in that** the outer damper part (14) has an outer peripheral contour which, viewed in cross-section through the damping means (12), deviates from the circular form, with which contour said part is in an engagement, which is positively locking with regard to the direction of rotation about the longitudinal centre axis (2), with an inner peripheral contour of a sleeve-shaped portion of a first shaft part (16) of the steering shaft, which inner contour, viewed in cross-section through the damping means (12), deviates from the circular form, the first shaft part (16) preferably protruding from the damping means (12) in the direction of the longitudinal centre axis (2).

12. A steering column according to one of Claims 1 to 11, **characterised in that** the inner damper part (13) has an inner peripheral contour which, viewed in cross-section, deviates from the circular form, with which contour said part is in an engagement, which is positively locking with regard to the direction of rotation about the longitudinal centre axis (2), with an outer peripheral contour of a portion of a second shaft part (17) of the steering shaft, which inner contour, viewed in cross-section, deviates from the circular form, the second shaft part (17) preferably protruding from the damping means (12) in the direction of the longitudinal centre axis (2).

13. A steering column according to Claim 11 and Claim 12, **characterised in that** the second shaft part (17), also on the side on which the first shaft part (16) leads away from the damping means, projects axially across the inner and the outer damper part (13, 14) and in this region has a radially outwards projecting collar (17d) which is designed as an annular collar and has an outer peripheral contour which deviates from a circular form, with contact faces which in the event of very large moments of torsion between the first shaft part (16) and the second shaft part (17) are brought into contact with contact portions (14e) of the outer damper part (14) or directly with contact portions of the first shaft part (16).

14. A steering column according to one of Claims 1 to 13, **characterised in that** the second shaft part (17) is connected in rotation-resistant manner to a third shaft part (18), the third shaft part (18) preferably protruding from the second shaft part (17) in the direction of the longitudinal centre axis (2).

15. A steering column according to one of Claims 1 to 14, **characterised in that** the steering shaft comprises a rear steering-shaft portion (1) which runs in rectilinear manner and is rotatable about the longitudinal centre axis (2) and on which a steering wheel (4) can be mounted on one rear end (3), and at least one further steering-shaft portion (10), which is connected to the rear steering-shaft portion (1) via a cardan joint (6) which comprises a rear joint fork (7), a front joint fork (8) and a cardan spider (9) which connects the rear joint fork (7) and the front joint fork (8), the damping means (12) being integrated in the rear steering-shaft portion (1), the rear steering-shaft portion (1) being rotatably mounted via at least one front pivot bearing (20) which lies between the damping means (12) and the cardan joint (6), and the rear steering-shaft portion (1) is rotatably mounted at least via a rear pivot bearing (19) which lies between the damping means (12) and the rear end (3) of the rear steering-shaft portion (1).

16. A steering column according to Claim 15, **characterised in that** the steering column has an electric power assistance means (32), the damping means (12) being arranged between the rear end of the rear steering-shaft portion (1) and the electric power assistance means (32).

17. A steering column according to Claim 15 or 16, **characterised in that** the steering column is adjustable at least in its length, the rear steering-shaft portion (1) comprising two shaft parts (18, 23) which can be telescoped relative to one another.

## Revendications

1. Colonne de direction pour un véhicule automobile avec un arbre de direction, un dispositif d'amortissement (12) étant prévu pour l'amortissement de vibrations transmises par l'arbre de direction, lequel comporte une partie d'amortissement (13) intérieure rotative autour d'un axe médian longitudinal (2), dont le contour périphérique extérieur vu en section transversale du dispositif d'amortissement (12) présente plusieurs élévations (13a) extérieures faisant saillie radialement vers l'extérieur espacées les unes des autres dans le sens périphérique autour de l'axe médian longitudinal (2), entre lesquelles des cavités (13b) extérieures du contour périphérique extérieur de la partie d'amortissement intérieure (13) se trouvent, la transition entre une élévation (13a) extérieure respective et une cavité (13b) extérieure qui y est contigüe se trouvant là où le contour périphérique extérieur de la partie d'amortissement intérieure (13) traverse le point radial qui correspond à la valeur médiane entre le point se trouvant radialement le plus à l'extérieur de l'élévation extérieure (13a) et le point se trouvant radialement le plus à l'intérieur de la cavité extérieure (13b), une partie d'amortissement (14) extérieure rotative autour de l'axe médian longitudinal (2) entourant la partie d'amortissement intérieure (13), dont le contour périphérique intérieur vu en section transversale du dispositif d'amortissement (12) présente plusieurs élévations (14a) intérieures faisant saillie radialement vers l'intérieur, espacées les unes des autres dans le sens périphérique autour de l'axe médian longitudinal (2) de la section d'arbre de direction (1) arrière, entre lesquelles des cavités (14b) intérieures du contour périphérique intérieur de la partie d'amortissement extérieure (14) se trouvent, la transition entre une élévation intérieure (14a) respective et une cavité intérieure (14b) qui y est contigüe se trouvant là où le contour périphérique intérieur de la partie d'amortissement extérieure (14) traverse le point radial qui correspond à la valeur médiane entre le point se trouvant radialement le plus à l'intérieur de l'élévation intérieure (14a) et le point se trouvant radialement le plus à l'extérieur de la cavité intérieure (14b), et un matériau d'amortissement (15) élastomère agencé dans un espace intermédiaire radial entre la partie d'amortissement (13) intérieure et la partie d'amortissement extérieure (14), lequel matériau remplit complètement l'espace intermédiaire entre la partie d'amortissement (13) intérieure et la partie d'amortissement extérieure (14), la plage angulaire (α), sur laquelle une élévation extérieure respective (13a) du contour périphérique extérieur de la partie d'amortissement intérieure (13) s'étend dans le sens périphérique autour de l'axe médian longitudinal (2), étant plus petite que la plage angulaire respective (β) sur laquelle une cavité extérieure respective (13b) du contour périphérique extérieur de la partie d'amortissement intérieure (13) s'étend dans le sens périphérique autour de l'axe médian longitudinal (2), **caractérisée en ce que** le matériau d'amortissement élastomère (15) est relié par matière et/ou adhésif non seulement à la surface intérieure de la partie d'amortissement extérieure (14) mais aussi à la surface extérieure de la partie d'amortissement intérieure (13).

2. Colonne de direction selon la revendication 1, **caractérisée en ce que** l'épaisseur du matériau d'amortissement élastomère (15) est sensiblement constante vu en section transversale à angles droits par rapport à l'axe médian longitudinal le long de la périphérie entière.

3. Colonne de direction selon la revendication 1 ou 2, **caractérisée en ce que** la plage angulaire respective (β), sur laquelle une cavité extérieure respective (13b) du contour périphérique extérieur de la partie d'amortissement intérieure s'étend dans le sens périphérique autour de l'axe médian longitudinal (2), est plus grande de 25 à 50 % que la plage angulaire (α), sur laquelle une élévation extérieure respective (13a) du contour périphérique extérieur de la partie d'amortissement intérieure (13) s'étend dans le sens périphérique autour de l'axe médian longitudinal (2).

4. Colonne de direction selon la revendication 1 à 3, **caractérisée en ce que** les élévations extérieures (13a) du contour périphérique extérieur de la partie d'amortissement intérieure (13) pénètrent dans les cavités intérieures (14b) du contour périphérique intérieur de la partie d'amortissement (14) extérieure.

5. Colonne de direction selon l'une des revendications 1 à 4, **caractérisée en ce que** vu en section transversale du dispositif d'amortissement (12), le contour périphérique extérieur de la partie d'amortissement intérieure (13) présente des premières sections courbées, lesquelles forment les élévations extérieures (13a), les élévations (13a) extérieures formées par les premières sections étant inscrites dans un premier rayon de courbure (r1), et présente des secondes sections qui se trouvent entre les premières sections dans les zones des cavités extérieures (13b) et qui présentent des fonds qui possèdent un second rayon de courbure (r2) qui est plus grand que le premier rayon de courbure (r1) ou qui s'étendent en ligne droite.

6. Colonne de direction selon la revendication 5, **caractérisée en ce que** le second rayon de courbure (r2) est plus de deux fois plus grand, de préférence plus de trois fois plus grand que le premier rayon de courbure (r1).

7. Colonne de direction selon l'une quelconque des revendications 1 à 6, **caractérisée en ce que** les cavités extérieures (13b) présentent des fonds qui présentent vu en section transversale du dispositif d'amortissement une forme courbée de manière convexe vers l'extérieur ou s'étendent en ligne droite.

8. Colonne de direction selon l'une quelconque des revendications 5 à 7, **caractérisée en ce que** les premiers et seconds rayons de courbure (r1, r2) s'étendent autour de points médians qui se trouvent dans le contour périphérique extérieur de la partie d'amortissement intérieure (13).

9. Colonne de direction selon l'une quelconque des revendications 5 à 8, **caractérisée en ce que** la partie d'amortissement intérieure (13) est formée par une douille et le premier rayon de courbure (r1) s'élève à 0,8 à 1,2 fois la valeur de l'épaisseur de paroi mesurée dans la zone d'une des cavités extérieures (13b) de cette douille.

10. Colonne de direction selon l'une quelconque des revendications 1 à 9, **caractérisée en ce que** le rayon d'un plus grand circuit de circonscription de la partie d'amortissement intérieure (13) qui s'étend par les points se trouvant radialement le plus à l'extérieur des élévations extérieures (13a), est plus grand de 10 à 30% que le rayon d'un plus petit circuit de circonscription de la partie d'amortissement intérieure (13) qui s'étend par les points se trouvant radialement le plus à intérieur des cavités extérieures (13b).

11. Colonne de direction selon l'une quelconque des revendications 1 à 10, **caractérisée en ce que** la partie d'amortissement extérieure (14) présente un contour périphérique extérieur divergeant de la forme circulaire, vu en section transversale du dispositif d'amortissement (12), avec lequel contour elle est en engagement par complémentarité de formes par rapport au sens de rotation autour de l'axe médian longitudinal (2) avec un contour périphérique intérieur divergeant de la forme circulaire, vu en section transversale du dispositif d'amortissement (12), d'une section en forme de douille d'une première partie d'onde (16) de l'arbre de colonne, la première partie d'onde (16) dépassant de préférence du dispositif d'amortissement (12) en direction de l'axe médian longitudinal (2).

12. Colonne de direction selon l'une quelconque des revendications 1 à 11, **caractérisée en ce que** la partie d'amortissement intérieure (13) présente un contour périphérique intérieur divergeant de la forme circulaire, vu en section transversale, avec lequel contour elle est en engagement par complémentarité de formes par rapport au sens de rotation autour de l'axe médian longitudinal (2) avec un contour périphérique extérieur divergeant de la forme circulaire, vu en section transversale, d'une section d'une deuxième partie d'onde (17) de l'arbre de direction, la deuxième partie d'onde (17) dépassant de préférence du dispositif d'amortissement (12) en direction de l'axe médian longitudinal (2).

13. Colonne de direction selon les revendications 11 et 12, **caractérisée en ce que** la deuxième partie d'onde (17) dépasse axialement aussi sur le côté, sur lequel la première partie d'onde (16) s'éloigne du dispositif d'amortissement, sur la partie d'amortissement intérieure et la partie d'amortissement extérieure (13, 14) et présente dans cette zone un collet (17d) dépassant radialement vers l'extérieur qui est réalisé comme un collet annulaire et possède un contour périphérique extérieur divergeant d'une forme circulaire avec des surfaces d'appui qui sont amenées en contact en cas de très grands couples de torsion entre la première partie d'onde (16) et la deuxième partie d'onde (17) avec des sections d'appui (14e) de la partie d'amortissement extérieure (14) ou directement avec des sections d'appui de la première partie d'onde (16).

14. Colonne de direction selon l'une quelconque des revendications 1 à 13, **caractérisée en ce que** la deuxième partie d'onde (17) est reliée sans pouvoir tourner à une troisième partie d'onde (18), la troisième partie d'onde (18) dépassant de préférence de la deuxième partie d'onde (17) en direction de l'axe médian longitudinal (2).

15. Colonne de direction selon l'une quelconque des revendications 1 à 14, **caractérisée en ce que** l'arbre de direction comporte une section d'arbre de direction (1) arrière qui s'étend en ligne droite et est rotative autour de l'axe médian longitudinal (2) et sur laquelle un volant (4) peut être monté sur une extrémité arrière (3), et au moins une autre section d'arbre de direction (10) qui est reliée à la section d'arbre de direction arrière (1) par une articulation de Cardan (6) qui comporte une fourche articulée arrière (7), une fourche articulée avant (8) et un croisillon de tenon (9) reliant la fourche articulée arrière (7) et la fourche articulée avant (8), le dispositif d'amortissement (12) étant intégré dans la section d'arbre de direction arrière (1), la section d'arbre de direction arrière (1) étant logé de manière rotative sur au moins un palier rotatif (20) avant, lequel se trouve entre le dispositif d'amortissement (12) et l'articulation de Cardan (6), et la section d'arbre de direction arrière (1) étant logée de manière rotative au moins sur un palier rotatif arrière (19) qui se trouve entre le dispositif d'amortissement (12) et l'extrémité arrière (3) de la section d'arbre de direction (1) arrière.

16. Colonne de direction selon la revendication 15, **caractérisée en ce que** la colonne de direction présente un dispositif de force auxiliaire (32) électrique, le dispositif d'amortissement (12) étant agencé entre l'extrémité arrière de la section d'arbre de direction arrière (1) et le dispositif de force auxiliaire (32) électrique.

17. Colonne de direction selon la revendication 15 ou 16, **caractérisée en ce que** la colonne de direction est réglable au moins dans sa longueur, la section d'arbre de direction (1) arrière comportant deux parties d'onde (18, 23) télescopables l'une contre l'autre.
